(19) Europäisches Patentamt / European Patent Office / Office européen des brevets

(11) **EP 2 619 832 B1**

(12) **FASCICULE DE BREVET EUROPEEN**

(45) Date de publication et mention
de la délivrance du brevet:
**28.01.2015 Bulletin 2015/05**

(21) Numéro de dépôt: **11764821.2**

(22) Date de dépôt: **31.08.2011**

(51) Int Cl.:
*H01M 4/133* *(2010.01)*          *H01M 4/136* *(2010.01)*
*H01M 4/80* *(2006.01)*           *H01M 10/0525* *(2010.01)*
*H01M 4/74* *(2006.01)*           *H01M 4/66* *(2006.01)*

(86) Numéro de dépôt international:
**PCT/FR2011/051996**

(87) Numéro de publication internationale:
**WO 2012/038634 (29.03.2012 Gazette 2012/13)**

(54) **ÉLECTRODE POUR BATTERIES LITHIUM ET SON PROCÉDÉ DE FABRICATION**

ELEKTRODE FÜR LITHIUMBATTERIEN UND HERSTELLUNGSVERFAHREN DAFÜR

ELECTRODE FOR LITHIUM BATTERIES AND ITS METHOD OF MANUFACTURE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.09.2010 FR 1057592**

(43) Date de publication de la demande:
**31.07.2013 Bulletin 2013/31**

(73) Titulaire: **Commissariat à l'Énergie Atomique
et aux Énergies Alternatives
75015 Paris (FR)**

(72) Inventeurs:
• **SOLAN, Sébastien**
  **F-38170 Seyssinet-pariset (FR)**
• **GIROUD, Nelly**
  **F-42100 Saint Etienne (FR)**

(74) Mandataire: **Cabinet Laurent & Charras
Le Contemporain
50 Chemin de la Bruyère
69574 Dardilly Cedex (FR)**

(56) Documents cités:
**JP-A- 61 203 569          JP-A- 2006 164 810
JP-A- 2009 059 654          JP-A- 2009 181 905
US-A- 4 960 655          US-A- 5 747 195**

**Description**

**DOMAINE DE L'INVENTION**

La présente invention concerne une électrode pour batterie lithium comprenant un collecteur de courant réalisé en fibres de carbone.

Le domaine d'utilisation de la présente invention se rapporte particulièrement aux générateurs électrochimiques au lithium fonctionnant sur le principe d'insertion et/ou de désinsertion (ou intercalation-désintercalation) de lithium sur au moins une électrode.

**ETAT ANTERIEUR DE LA TECHNIQUE**

Parmi les batteries lithium ion, Li ion, on peut distinguer les batteries primaires non rechargeables des batteries secondaires pouvant être rechargées. En général une batterie lithium comporte deux électrodes séparées par un constituant électrolytique. Ces électrodes, l'une étant positive et l'autre négative, sont chacune reliées à un collecteur de courant, dont le matériau peut changer en fonction de la nature de l'électrode.

De manière générale, l'électrode positive est constituée de matériaux d'insertion du cation lithium, alors que l'électrode négative est souvent réalisée en carbone graphite, en silicium, en carbure de silicium ou en lithium métal.

Le constituant électrolytique comporte un séparateur polymère ou composite microporeux imbibé d'électrolyte organique permettant le déplacement de l'ion lithium de l'électrode positive à l'électrode négative et inversement (cas de la charge ou la décharge) générant ainsi le courant. D'autre part, l'électrolyte est un mélange de solvants organiques dans lequel est généralement ajouté un sel de lithium.

Il est bien établi qu'une électrode de batterie lithium peut être fabriquée à partir d'une encre comprenant un matériau actif pulvérulent, un conducteur électronique et un liant polymère. La formulation de l'encre dépend principalement du matériau actif de l'électrode et donc du type de batterie Li ion envisagée.

En effet, les matériaux actifs présentent chacun une capacité spécifique propre (voir tableau 1 ci-dessous), le choix de l'électrode est lié à l'accumulateur. Par exemple, l'électrode est fine et faiblement grammée pour les accumulateurs dits de puissance, supportant des régimes de décharge élevés. En revanche, l'électrode est épaisse et grammée pour les accumulateurs dits d'énergie, adaptés à des régimes de charge plus lents (C/5 voire C/2).

**Tableau 1 :** CAPACITES SPECIFIQUES DES PRINCIPAUX MATERIAUX D'ELECTRODES.

| Matériau actif | Capacité spécifique (mAh.g$^{-1}$) |
|---|---|
| Cgr | 310 |
| $Li_4Ti_5O_{12}$ | 160 |
| Silicium | > 4000 |
| SiC | > 500 |
| $LiCoO_2$ | 160 |
| $LiNi_{0,33}Mn_{0,33}CO_{0,33}O_2$ | 130 |
| $Li(Ni,Co,Al)_1O_2$ | 160 |
| $LiFePO_4$ | 140 |
| $LiNi_{0,4-0,5}Mn_{1,5-1,6}O_4$ | 160 |

Les collecteurs de courant sur lesquels les électrodes sont déposées sont généralement métalliques et peuvent être en :

- aluminium pour les électrodes positives ;
- aluminium pour une électrode négative de titanate $Li_4Ti_5O_{12}$;
- cuivre pour les électrodes négatives en graphite (Cgr), en silicium (Si) ou en carbure de silicium (Si-C) ;
- acier inoxydable ;
- nickel ;
- cuivre nickelé.

Cependant, ces collecteurs de courant métalliques présentent plusieurs inconvénients. En effet, leur masse volumique relativement importante entraine la diminution de la densité d'énergie massique des batteries lithium. De plus, ils se dégradent au cours des cyclages (corrosion), diminuant ainsi la durée de vie de l'accumulateur lithium. Finalement, les électrodes adhèrent peu au collecteur de courant métallique. Un décollement est souvent observé lors de la sollicitation mécanique de l'électrode et/ou de la batterie, surtout dans le cas des électrodes préparées par voie aqueuse.

Afin de remédier à certains de ces problèmes, des collecteurs de courant à base de carbone ont été développés. Par exemple, le document JP59035363 décrit un collecteur de courant d'électrode positive préparé par mélange de fibres de carbone et de CMC (carboxyméthylcellulose). La pâte obtenue est ensuite moulée dans une forme cylindrique, séchée et brûlée sous atmosphère d'azote.

Le document JP11339774 décrit un collecteur de courant en papier de fibres de carbone. Une électrode de batterie lithium secondaire est préparée par dépôt d'une pâte de couche composite d'un oxyde métallique et d'un liant (polyaniline/ acide disulfonique) au sein du collecteur de courant.

Le document WO2007/118281 fait état d'un collecteur de courant flexible comprenant un matériau non conducteur et un matériau conducteur pouvant être des fibres de carbone.

JP2006 164810 décrit un procédé de réalisation d'une électrode utilisant du polyacrylate comme liant polymérique

Le dépôt d'une électrode sur un collecteur de courant de l'art antérieur présente certaines contraintes liées à la nature du liant ou à la technique de dépôt (pâte). De plus, le mélange d'un matériau conducteur avec un polymère ou un matériau non conducteur alourdit le collecteur de courant et diminue la densité d'énergie massique de la batterie.

Le Demandeur a mis au point une électrode comprenant un support permettant d'éviter les écueils de l'art antérieur et dont le collecteur présente les avantages suivants :

- flexibilité accrue par rapport aux collecteurs métalliques conventionnels ;
- adhérence de l'électrode au support ;
- durée de vie du collecteur de courant ;
- augmentation de la densité d'énergie massique de la batterie ;
- dépôt de l'encre d'électrode par enduction ou impression.

**EXPOSE DE L'INVENTION**

La présente invention concerne une électrode pour batterie lithium comprenant un collecteur de courant réalisé en fibres de carbone, ainsi que son procédé de réalisation. Il s'agit d'une électrode dont le collecteur de courant est poreux et réalisé en fibres de carbone.

Typiquement, le collecteur de courant, ou collecteur de courant d'électrode, est en fibres de carbone tissées ou non tissées, plus avantageusement en fibres de carbone non tissées. Avantageusement, le collecteur de courant de l'électrode selon l'invention présente une porosité comprise entre 70% et 85%, typiquement de l'ordre de 80%.

L'utilisation de fibres de carbones présente plusieurs avantages par rapport aux collecteurs de courant de l'art antérieur. En effet, un collecteur de courant en non tissé de carbone constitué de fibres de carbone entrelacées, présente les principales caractéristiques suivantes :

- température de dégradation = 600°C, permettant son utilisation dans des batteries à haute température ;
- bon conducteur électronique ;
- matériau poreux présentant une forte rugosité de surface permettant ainsi une très bonne adhérence des encres d'électrodes ;
- bonne définition d'impression ;
- adapté aux procédés d'enduction classique ;
- matériau souple et flexible ;
- matériau léger et peu couteux. La masse volumique du feutre non tissé de carbone est largement inférieure à celle des collecteurs métalliques les plus couramment utilisés (tableau 2).

**Tableau 2 :** MASSE VOLUMIQUE DES COLLECTEURS METALLIQUES LES PLUS COURANTS ET DU NON TISSE DE CARBONE

| Matériau collecteur | Masse volumique (g.cm$^{-3}$) |
|---|---|
| Aluminium | 2,69 |
| Cuivre | 8,87 |

(suite)

| Matériau collecteur | Masse volumique (g.cm$^{-3}$) |
|---|---|
| Cuivre nickelé | 8,95 |
| Nickel | 8,90 |
| Inox | 8,02 |
| Feutre non tissé de carbone (ref H2315V1)[i] | 0,628 |
| [i] Freudenberg H2315, PEMFC GDL. | |

La présente invention concerne également la réalisation d'une électrode pour batterie lithium, par dépôt d'une encre d'électrode sur ledit collecteur de courant. Ladite électrode peut être positive ou négative. De manière préférée, il s'agit d'une électrode négative.

De manière avantageuse, le dépôt de l'encre d'électrode est réalisé par enduction ou par impression (sérigraphie, flexographie, héliogravure, jet d'encre).

Le collecteur de courant étant poreux, il est possible en outre de faire pénétrer les matériaux actifs de l'encre dans sa structure en réalisant l'enduction sous aspiration par exemple.

La présente invention concerne donc le procédé de réalisation d'une électrode, pour batterie lithium, comprenant les étapes suivantes :

- dépôt d'une encre d'électrode sur un collecteur de courant en fibres de carbone par enduction ou impression ; ladite encre comprend au moins un matériau actif d'électrode, au moins un liant polymérique, au moins un conducteur électronique. Typiquement, l'épaisseur du collecteur peut être comprise entre 100 et 400 micromètres, et par exemple de l'ordre de 160 micromètres.
- séchage : évaporation du solvant. Typiquement, l'électrode peut être séchée dans une étuve à circulation d'air à 60°C.

Le collecteur de courant est poreux et réalisé en fibres de carbone tissées ou non tissées. En outre, le liant polymérique de l'encre est du PAAc(poly(acide acrylique)), notamment lorsque le collecteur de courant est en fibres de carbone non tissées.

Optionnellement, le procédé de réalisation ci-dessus peut comprendre une étape d'aspiration de l'encre sur le collecteur simultanément à l'étape de dépôt ou à l'étape de séchage ou entre ces deux étapes, selon tout moyen à la portée de l'homme du métier, comme par exemple sur une table de séchage.

En outre, l'électrode peut éventuellement être calandrée ou comprimée, même si dans le cadre de l'invention, cette étape est superflue lorsque du PAAc (poly(acide acrylique)) en tant que liant d'électrode est employé.

Par ailleurs, compte tenu de la fragilité du collecteur non tissé, une étape de calandrage selon l'art antérieur est déconseillée ; selon l'invention il a été montré que l'utilisation d'un polymère de type PAAc en tant que liant d'électrode permettait de s'affranchir de cette étape de calandrage, tout en conservant les propriétés des électrodes.

En général, l'encre comprend au moins un matériau actif, au moins un liant polymère ainsi qu'au moins un conducteur électronique. Le liant polymère, du PVDF (polyfluorure de vinylidène) en voie organique (solvant organique) ou un polymère soluble dans l'eau tel que le PAAc en voie aqueuse (solvant aqueux), a pour fonction d'assurer la tenue mécanique des électrodes tout en garantissant un bon contact entre l'électrolyte et les grains du matériau. Le conducteur électronique, en général du noir de carbone, améliore quant à lui la conductivité électronique des électrodes.

Ainsi, comme déjà dit, dans le cadre de l'invention, le liant polymérique de l'encre est du PAAc (poly(acide acrylique)), notamment lorsque le collecteur de courant est en fibres de carbone non tissées. De préférence, il s'agit d'un PAAc de poids moléculaire compris entre 1.000.000 et 2.500.000 g.mol$^{-1}$, plus particulièrement de l'ordre de 1.250.000 g.mol$^{-1}$.

La composition de l'encre obtenue varie selon le matériau utilisé et l'application visée. Ainsi, le grammage de l'électrode et donc la masse de matériau actif par unité de surface peuvent être ajustés en contrôlant le taux de matériau actif et l'épaisseur d'enduction des encres formulées sur le collecteur de courant. Généralement, le grammage est directement rapporté en capacité surfacique par rapport à la capacité spécifique (en mAh.cm$^{-2}$) du matériau actif considéré:

L'électrode pour batterie lithium susceptible d'être obtenue selon le procédé de réalisation décrit ci-dessus entre également dans le cadre de la présente invention. Ladite électrode peut être positive ou négative.

L'invention a donc également trait à une électrode pour batterie Li-ion comprenant au moins un liant polymère de type PAAc, un matériau d'insertion du Li, éventuellement un additif électronique du type fibre ou noir de carbone déposé sur un collecteur de courant du type non-tissé de fibres de carbone.

De manière avantageuse, la capacité surfacique de l'électrode selon la présente invention est comprise entre 0,1 et 10 mAh.cm$^{-2}$, plus avantageusement entre 0,3 et 5 mAh.cm$^{-2}$.

Il est à noter que le matériau constitutif du collecteur de courant de l'électrode - objet de l'invention, présente des propriétés d'insertion du lithium lorsqu'il est utilisé en électrode négative avec ou sans dépôt d'encre négative. En effet, l'utilisation de tels collecteurs de courant en électrode négative permet d'obtenir un surcroit de capacité, le matériau collecteur insérant le lithium au sein de sa structure. Le Demandeur a ainsi découvert que, de manière surprenante, ce collecteur de courant peut également être utilisé en tant que matériau d'électrode négative en lui-même car il insère des ions lithium de façon réversible. Ainsi, la présente invention englobe également l'électrode négative pour batterie lithium comportant comme matériau électrochimiquement actif le collecteur de courant poreux et en fibres de carbone décrit ci-dessus.

En conséquence, la capacité surfacique de l'électrode négative (déposée sur le collecteur de courant en fibres de carbone) peut être supérieure à celle du matériau actif de l'électrode. En effet, la capacité du collecteur s'ajoute à celle du matériau actif déposé.

Dans le cadre de la présente invention, les électrodes positive ou négative pouvant être réalisées par dépôt d'une encre sur le collecteur de courant en fibres de carbone incluent de manière non limitative les électrodes suivantes :

- électrodes négatives de graphite Cgr ;
- électrodes négatives de silicium Si ;
- électrodes négatives à base de carbure de silicium ;
- électrodes positives en LiNi$_{0,33}$Mn$_{0,33}$Co$_{0,33}$O$_2$ ;
- électrodes positives en LiNi$_{0,5}$Mn$_{1,5}$O$_4$ ;
- électrodes positives en LiFePO$_4$.

Selon un mode de réalisation bien particulier, au moins une électrode positive et/ou au moins une électrode négative peuvent être déposées sur le même collecteur de courant poreux et réalisé en fibres de carbone tissées ou non tissées.

La présente invention concerne également un accumulateur lithium comportant au moins une électrode dont le collecteur de courant est poreux et en fibres de carbone, tel que décrit ci-avant. La présente invention concerne aussi une batterie lithium secondaire comportant au moins l'un de ces accumulateurs lithium.

De manière non limitative, les batteries lithium secondaires et les accumulateurs lithium-ion selon l'invention peuvent comporter au moins un couple d'électrodes choisi dans le groupe comprenant notamment les couples électrode négative/électrode positive suivants :

- carbone graphite/LiFePO$_4$ ;
- carbone graphite/LiNi$_{0,33}$Mn$_{0,33}$Co$_{0,33}$O$_2$ ;
- carbone graphite/LiNi$_x$Co$_y$Al$_z$O$_2$ avec x+y+z = 1 ;
- carbone graphite/LiMnO$_2$ ;
- carbone graphite/LiNiO$_2$ ;
- titanate Li$_4$Ti$_5$O$_{12}$/LiFePO$_4$;
- titanate Li$_4$Ti$_5$O$_{12}$/LiNi$_{0,4-0,5}$Mn$_{1,5-1,6}$O$_4$ ;
- carbone graphite/LiNi$_{0,4-0,5}$Mn$_{1,5-1,6}$O$_4$.

La présente invention concerne également une batterie lithium primaire comprenant au moins une électrode conforme à la présente invention. Une batterie lithium primaire n'est pas rechargeable.

Devant les innombrables combinaisons, l'homme du métier saura choisir le matériau actif et l'électrode appropriés en fonction de l'application visée.

## BREVE DESCRIPTION DES FIGURES

L'invention et les avantages qui en découlent ressortiront mieux des figures et exemples suivants.

La figure 1 illustre les éléments constitutifs d'une batterie lithium de l'art antérieur.
La figure 2 montre le schéma descriptif des constituants d'une pile bouton de l'art antérieur ainsi que leur ordre.
La figure 3 montre une image réalisée au microscope électronique à balayage du non tissé de carbone utilisé comme collecteur de courant.
La figure 4a montre une photographie d'électrodes positive de LiFePO$_4$ (16) et négative de Cgr (17) enduites sur le même collecteur de courant en non tissé de carbone (15).
La figure 4b montre une photographie illustrant la qualité de définition d'une électrode positive de LiFePO$_4$ réalisée

par impression (sérigraphie) sur un collecteur de courant en non tissé de carbone.

La figure 4c montre une photographie illustrant la flexibilité d'électrodes positive de LiPO$_4$ (16) et négative de Cgr (17) enduites sur un collecteur de courant en non tissé de carbone (15).

La figure 4d montre une photographie illustrant l'adhérence d'électrodes positive de LiPO$_4$ (16) et négative de Cgr (17) enduites sur un collecteur de courant en non tissé de carbone (15).

La figure 5 illustre la capacité spécifique en mAh.g$^{-1}$ d'une électrode positive en LiFePO$_4$ à différents régimes de charge et décharge.

La figure 6 illustre la capacité spécifique en mAh.g$^{-1}$ d'une électrode négative en Cgr à différents régimes de charge et décharge.

La figure 7 illustre la capacité spécifique en mAh.g$^{-1}$ récupérée pour le collecteur de courant seul en non tissé de carbone.

## DESCRIPTION DETAILLEE DES FIGURES

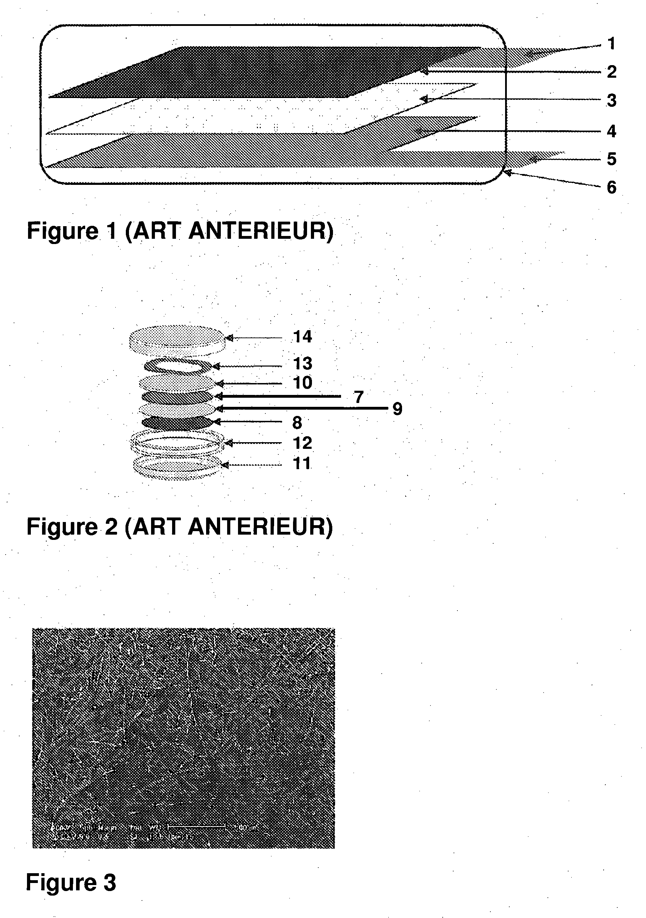

La figure 1 illustre les éléments constitutifs d'une batterie lithium ion. Un premier collecteur de courant (1) est solidaire d'une électrode positive (2), constituée de matériaux d'insertion du cation lithium. Ces matériaux d'insertion sont en général des matériaux composites, tels que par exemple LiFePO$_4$ (phosphate de fer lithié), ou d'oxyde de métaux de transition (matériaux lamellaires: LiCoO$_2$ : oxyde de cobalt lithié, LiNi$_{0,33}$Mn$_{0,33}$Co$_{0,33}$O$_2$...).

L'électrode positive (2) et l'électrode négative (4) sont séparées par un constituant électrolytique (3). Cet élément est lui-même composé d'un séparateur polymère ou composite microporeux imbibé d'électrolyte organique permettant le déplacement de l'ion lithium de l'électrode positive à l'électrode négative et inversement (cas de la charge ou la décharge) générant ainsi le courant. L'électrolyte est un mélange de solvants organiques, généralement associé à un sel de lithium LiPF$_6$. Ce mélange doit être exempt, dans la mesure du possible, de trace d'eau ou d'oxygène.

L'électrode négative (4) est typiquement en carbone graphite, en lithium métal ou, dans le cas des électrodes de puissance, en Li$_4$Ti$_5$O$_{12}$ (matériau titanate).

Un deuxième collecteur de courant (5) est solidaire de l'électrode négative (4).

L'ensemble des éléments (2), (3) et (4) est communément appelé coeur électrochimique (par extension les collecteurs (1) et (5) font aussi partie de ce coeur puisqu'ils sont solidaires des électrodes). Le coeur électrochimique est enveloppé par un emballage (6), ou un boitier.

La figure 2 montre le schéma descriptif des constituants d'une pile bouton ainsi que leur ordre. L'électrode négative (8) est séparée de l'électrode positive (7) par un séparateur (9).

Après avoir déposé un joint (12) au fond de la pile (11), l'électrode négative (8), le séparateur (9), et l'électrode positive (7) sont déposés sur le fond de la pile. L'électrode positive (8) est recouverte d'une cale inox (10) sur laquelle un ressort (13) est ensuite déposé avant de recouvrir l'ensemble par un couvercle (14).

Les collecteurs de courants font partie intégrante des électrodes (7) et (8).

## EXEMPLES DE REALISATION DE L'INVENTION

Une électrode positive (LiFePO$_4$) et une électrode négative (Cgr) ont été préparées à l'aide de deux encres, dont les formulations sont détaillées dans le tableau 3 ci-dessous.

Les électrodes sont réalisées en voie aqueuse, le liant polymère utilisé étant hydrosoluble. L'extrait sec des encres est ajusté par ajout d'eau. Toutefois il est aussi possible de réaliser ces encres en voie organique c'est-à-dire en utilisant du polyfluorure de vinylidène (PVDF) comme liant et de la N-méthyl-2-pyrrolidone (NMP) comme solvant.

**Tableau 3 :** FORMULATION DES ENCRES, ET RESULTATS OBTENUS POUR LES ENDUCTIONS DE LiFePO$_4$ ET Cgr AVEC LE POLYMERE LIANT PAAc.

| | | LiFePO$_4$ | | Cgr | |
|---|---|---|---|---|---|
| | | Cas (a) | Ordre d' insertion | Cas (b) | Ordre d' insertion |
| Formulation (% massique par rapport au poids de l'encre) | Matériau actif | LiFePO$_4$ [i] (94%) | 1 | Cgr[ii] (68%) | 1 |
| | Conducteur Electronique | Super P[iii] (1 %) | 2 | SFG6[iv] (17%) | 1 |
| | Fibres de carbone | Vgcf[iv] (1 %) | 3 | Tenax[iv] (5 %) | 1 |
| | Polymère liant | PAAc[v] (4 %) | 4 | PAAc[v] (10%) | 2 |
| | Eau | Ajustable pour l'extrait sec | 5 | Ajustable pour l'extrait sec | 3 |
| Extrait sec | | 33,6% | | 19,6% | |
| Epaisseur d'enduction humide | | 300 μm | | 300 μm | |
| Grammage (mAh.cm$^{-2}$) | | 1,7 | | 4,7 | |
| Capacité volumique (mAh.cm$^{-3}$) | | 70 | | 220 | |
| Porosité globale | | 76% | | 65% | |

[i] LiFePO$_4$ provient de Pulead Technology Industry
[ii] MCMB 2528
[iii] Super P = noir de carbone
[iv] SFG6, Vgcf, Tenax = fibres de carbones
[v] PAAc = polymère d'acide polyacrylique ; masse moléculaire = 1 250 000 g.mol$^{-1}$ solution à 3,5 % en poids dans l'eau.

L'enduction du collecteur de courant est réalisée sous aspiration afin de faire pénétrer le matériau d'électrode au sein de la structure de non tissé de carbone. Une fois l'encre enduite et séchée sur le collecteur en non tissé de carbone, des pastilles au diamètre de 14 mm sont découpées au moyen d'un emporte pièce. Elles sont ensuite pesées et leur épaisseur mesurée. La capacité en milliampère heure (mAh) de la pastille est alors calculée à partir de la masse de matériau actif contenu dans la pastille (équations 1 à 3) :

$$m_{MA} = (m_{tot} - m_{collecteur}) * \%(MA) / 100 \tag{1}$$

pour l'électrode négative :

$$m_{MA} = (m_{tot} - m_{collecteur}) * \%(MA) / 100 + m_{collecteur} \tag{2}$$

$$C_{pastille} = m_{MA} * C_{MA} * 1000 \tag{3}$$

$m_{MA}$ = masse de matériau actif
$m_{tot}$ = masse totale de la pastille
$m_{collecteur}$ = masse de la pastille de collecteur de courant seul de même diamètre
%(MA) = pourcentage de matériau actif dans la formulation
$C_{MA}$ = capacité spécifique du matériau actif (mAh.g$^{-1}$)

La valeur de l'extrait sec, correspondant au pourcentage de matière solide par rapport à l'ensemble des constituants de l'encre, est calculée à partir des équations 4 et 5 :

$$m_{tot} \text{ (Poudres)} = (m_{MA} + m_{CE} + m_{fibres} + m_{liant\ solide}) \qquad (4)$$

$$es = \{(m_{poudres}) / (m_{poudres} + m_{eau\ ajoutée} + m_{eau\ du\ liant})\}*100 \qquad (5)$$

$m_{CE}$ = masse de conducteur électronique

$m_{fibres}$ = masse de fibres ajoutées

$m_{liant\ solide}$ = masse de polymère solide

$m_{eau\ ajoutée}$ = masse d'eau (masse de solvant organique le cas échéant) ajoutée au mélange de poudre pour lui donner une consistante adéquate

$m_{eau\ du\ liant}$ = masse d'eau incorporée en même temps que le liant solide, celui-ci étant préalablement solubilisé

Les masses sont exprimées en milligramme (mg).

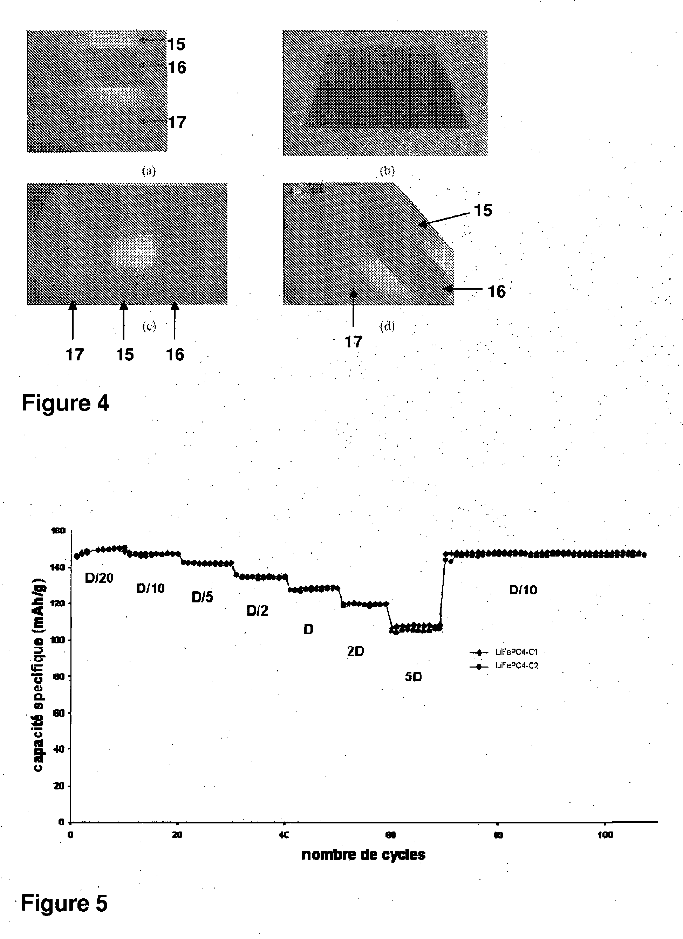

Les électrodes obtenues sont homogènes, sans grattons (amas de matière), sans craquelures et flexibles (figure 4). La découpe de pastille à l'emporte pièce n'induit pas de décollement de l'électrode sur le pourtour de la pastille. L'adhérence de l'électrode sur le non tissé de carbone est donc très bonne.

Les grammages et porosités obtenus pour les électrodes réalisées par enduction à 94% et 90% de matériau actif aux différents extraits secs sont récapitulés dans le tableau 3. Les électrodes épaisses et ayant donc un fort grammage (surfacique et volumique) présentent une très bonne adhérence de l'encre sur le collecteur de courant. De plus, ces électrodes sont flexibles et ne se décollent pas du collecteur de courant.
(Dans le cas de l'électrode négative de Cgr, le pourcentage de matériaux actifs comprend la quantité de conducteur électronique et de fibres de carbone.)

Tests de cyclage charge-décharge

Ces encres ont été testées en cyclage en demi-pile selon les configurations suivantes :

- Li métal// PE mélange EC/PC/DMC (1/1/3) (1 M LiPF$_6$) + 2%w VC //LiFePO$_4$ ;
- Li métal// PE mélange EC/PC/DMC (1/1/3) (1 M LiPF$_6$) + 2%w VC //Cgr.

EC = Ethylène carbonate ;
PC = propylène carbonate ;
DMC = diméthylecarbonate ;
1/1/3 = proportion en volume ;
1M LiPF$_6$ = 1 mole/litre de sel LiPF$_6$ ;
2%w VC = 2% en masse de vinylenecarbonate ;
PE = polyéthylène (Celgard 2400).

Le protocole de tests de l'électrode positive (LiFePO$_4$) est composé des étapes suivantes :

1) 10 cycles de charge et décharge à C/20-D/20 (étape de formation) ;
2) 10 cycles de charge et décharge à C/10-D/10 ;
3) 10 cycles de charge et décharge à C/5-D/5 ;
4) 10 cycles de charge et décharge à C/3-D/3 ;
5) 10 cycles de charge et décharge à C-D.

Le protocole de tests de l'électrode négative (Cgr) est composé des étapes suivantes :

1) 5 cycles de charge et décharge à C/20-D/20 suivis d'une étape de floating afin de bien compléter la charge et la décharge (étape de formation) (le floatting correspond à une étape de charge ou décharge complétée pour arriver au potentiel) ;
2) 50 cycles de charge et décharge à C/10-D/10 toujours complétés d'une étape de floating.

Un cycle de charge C/20 signifie qu'un courant constant est imposé à la batterie pendant une durée de 20 heures, la valeur du courant étant égale à la capacité divisée par 20. Un cycle D/5 correspond à une décharge de 5 heures.

8

Résultats des tests de cyclage de l'électrode positive :

L'électrode positive en LiFePO$_4$ enduite sur le support non tissé de carbone présente de très bonnes performances (tableau 4 et figure 5). En effet, Les capacités spécifiques récupérées sont supérieures à la capacité spécifique théorique du matériau (140 mAh.g$^{-1}$, voir tableau 1). Le matériau restitue donc toute sa capacité. De plus, ces résultats sont très stables, il n'y a pas de perte de capacité au cours des cycles.

**Tableau 4 :** CAPACITE SPECIFIQUE MOYENNE DES ELECTRODES DE LiFePO$_4$ ENDUITES SUR UN COLLECTEUR EN NON TISSE DE CARBONE, ET TESTEES A DIFFERENTS REGIMES.

| | Capacité spécifique moyenne (mAh.g$^{-1}$) à D/20 | Capacité spécifique moyenne (mAh.g$^{-1}$) à D/10 | Capacité spécifique moyenne (mAh.g$^{-1}$) à D/5 |
|---|---|---|---|
| LiFePO$_4$-C1 | 149,1 | 147,2 | 142,5 |
| LiFePO$_4$-C2 | 148,8 | 146,9 | 142,2 |
| LiFePO$_4$-C1 et LiFePO$_4$-C2 représentent deux électrodes réalisées à partir de la même encre. | | | |

Résultats des tests de cyclage de l'électrode négative :

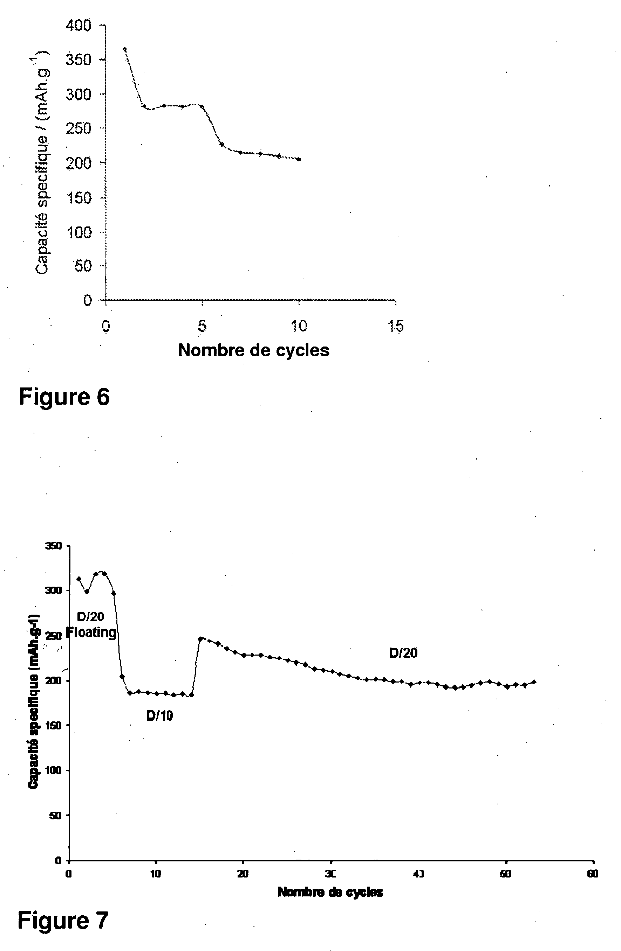

La capacité spécifique de l'électrode négative en Cgr est légèrement supérieure à 308 mAh.g$^{-1}$ (moyenne sur les cycles à C/20, voir figure 6). Il n'est donc pas nécessaire de comprimer l'électrode négative pour obtenir les meilleurs résultats en termes de capacité spécifique récupérée.

Ainsi, l'un des effets non prévisibles et très avantageux de la présente invention concerne l'insertion et la désinsertion des cations Li dans le non tissé de carbone. Le conducteur de courant en fibres de carbone peut donc servir d'électrode négative sans ajout de matériau actif supplémentaire. Sa capacité spécifique a été évaluée à 308 mAh.g$^{-1}$ (figure 7), grâce a un cyclage en demi-pile très lent.

Il apparait clairement que le collecteur de courant en non tissé de carbone peut être utilisé comme une électrode négative. Cette électrode a la même capacité spécifique qu'une électrode en Cgr. Par contre elle présente l'avantage d'être beaucoup plus légère. De plus, complété avec une électrode à base de PAAc en tant que liant polymère, on s'affranchit de l'étape de compression de l'électrode, ce qui permet de préserver le collecteur en non tissé de carbone.

**Revendications**

1.  Procédé de réalisation d'une électrode pour batterie lithium comprenant les étapes suivantes :

    - dépôt d'une encre sur un collecteur de courant, par enduction ou impression, ladite encre comprenant au moins un matériau actif d'électrode, au moins un liant polymérique, au moins un conducteur électronique ;
    - séchage : évaporation du solvant ; le collecteur de courant étant poreux et réalisé en fibres de carbone tissées ou non tissées ;

    le liant polymérique de l'encre étant du poly(acide acrylique) présentant un poids moléculaire compris entre 1000 000 et 2 500 000 g.mol$^{-1}$.

2.  Procédé de réalisation d'une électrode pour batterie lithium selon la revendication 1, **caractérisé en ce que** le collecteur de courant présente une porosité comprise entre 70% et 85%, typiquement de l'ordre de 80%.

3.  Procédé de réalisation d'une électrode pour batterie lithium selon l'une des revendications 1 et 2, *caractérisé en ce qu'*il comprend en outre une étape d'aspiration de l'encre sur le collecteur simultanément à l'étape de dépôt ou à l'étape de séchage ou entre ces deux étapes, de préférence sur une table de séchage.

4.  Electrode pour batterie lithium obtenue selon l'une des revendications 1 à 3.

5.  Electrode selon la revendication 4, *caractérisée* **en ce que** ladite électrode est positive ou négative.

6.  Electrode selon l'une des revendications 4 et 5, *caractérisée* **en ce que** la capacité surfacique de ladite électrode est comprise entre 0,1 et 10 mAh.cm$^{-2}$.

**7.** Electrode selon la revendication 6, *caractérisée* **en ce que** la capacité surfacique de ladite électrode est comprise entre 0,3 et 5 mAh.cm$^{-2}$.

**8.** Accumulateur lithium comprenant au moins une électrode selon l'une des revendications 4 à 7.

**9.** Batterie lithium primaire comprenant au moins une électrode selon l'une des revendications 4 à 7.

**10.** Batterie lithium secondaire comprenant au moins un accumulateur lithium selon la revendication 8.

**Patentansprüche**

**1.** Verfahren zum Herstellen einer Elektrode für Lithiumbatterien, umfassend die nachfolgenden Schritte:

- Aufbringen einer Tinte auf einen Stromkollektor durch Beschichtung oder Aufdruck, wobei die Tinte zumindest ein aktives Elektrodenmaterial, zumindest ein polymeres Bindemittel und zumindest einen elektronischen Leiter aufweist;
- Trocknen: Verdampfung des Lösungsmittels;

wobei der Stromkollektor porös ist und aus gewebten oder nichtgewebten Kohlenstofffasern hergestellt ist; wobei das polymere Bindemittel der Tinte Polyacrylsäure mit einem Molekulargewicht zwischen 1 000 000 und 2 500 000 g.mol$^{-1}$ ist.

**2.** Verfahren zum Herstellen einer Elektrode für Lithiumbatterien nach Anspruch 1, **dadurch gekennzeichnet, dass** der Stromkollektor eine Porosität zwischen 70 % und 85 %, typischerweise in der Größenordnung von 80 % aufweist.

**3.** Verfahren zum Herstellen einer Elektrode für Lithiumbatterien nach einem der Ansprüche 1 und 2, **dadurch gekennzeichnet, dass** es ferner einen Schritt des Ansaugens von Tinte an den Kollektor gleichzeitig mit dem Schritt des Aufbringens oder mit dem Schritt des Trocknens oder zwischen diesen beiden Schritten, vorzugsweise auf einem Trocknungstisch, umfasst.

**4.** Elektrode für Lithiumbatterien, die nach einem der Ansprüche 1 bis 3 erhalten wird.

**5.** Elektrode nach Anspruch 4, **dadurch gekennzeichnet, dass** die Elektrode positiv oder negativ ist.

**6.** Elektrode nach einem der Ansprüche 4 und 5, **dadurch gekennzeichnet, dass** die Flächenkapazität der Elektrode zwischen 0,1 und 10 mAh.cm$^{-2}$ beträgt.

**7.** Elektrode nach Anspruch 6, **dadurch gekennzeichnet, dass** die Flächenkapazität der Elektrode zwischen 0,3 und 5 mAh.cm$^{-2}$ beträgt.

**8.** Lithium-Akkumulator mit zumindest einer Elektrode nach einem der Ansprüche 4 bis 7.

**9.** Primär-Lithiumbatterie mit zumindest einer Elektrode nach einem der Ansprüche 4 bis 7.

**10.** Sekundär-Lithiumbatterie mit zumindest einem Lithium-Akkumulator nach Anspruch 8.

**Claims**

**1.** A method for manufacturing a lithium battery electrode comprising the steps of:

- depositing an electrode ink on a current collector by coating or printing; said ink comprising at least one active electrode material, at least one polymer binder, at least one electronic conductor;
- drying: evaporating the solvent;

the current collector being porous and made of woven or nonwoven carbon fibers; the polymer binder of the ink being poly(acrylic acid) having a molecular weight ranging between 1000 000 and 2 500 000 g.mol$^{-1}$.

**2.** The method for forming an electrode for a lithium battery of claim 1, **characterized in that** the current collector has a porosity ranging between 70% and 85%, typically on the order of 80%.

**3.** The method for forming an electrode for a lithium battery of claim 1, **characterized in that** it further comprises a step of suction of the ink on the collector simultaneously to the deposition step or to the drying step or between these two steps, preferably on a drying table.

**4.** An electrode for a lithium battery obtained according to any of claims 1 to 3.

**5.** The electrode of claim 4, **characterized in that** said electrode is positive or negative.

**6.** The electrode of any of claims 4 and 5, **characterized in that** the area capacity of said electrode ranges between 0.1 and 10 mAh.cm$^{-2}$.

**7.** The electrode of claim 6, **characterized in that** the area capacity of said electrode ranges between 0.3 and 5 mAh.cm$^{-2}$.

**8.** A lithium accumulator comprising at least one electrode of any of claims 4 to 7.

**9.** A primary lithium battery comprising at least one electrode of any of claims 4 to 7.

**10.** A secondary lithium battery comprising at least one lithium accumulator of claim 8.

EP 2 619 832 B1

Figure 1 (ART ANTERIEUR)

Figure 2 (ART ANTERIEUR)

Figure 3

Figure 4

Figure 5

**Figure 6**

**Figure 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 59035363 B
- JP 11339774 B
- WO 2007118281 A
- JP 2006164810 A